# EUROPÄISCHE PATENTSCHRIFT

(11) **EP 2 589 847 B1**
(45) Veröffentlichungstag und Bekanntmachung des Hinweises auf die Patenterteilung: **23.03.2016**
(21) Anmeldenummer: 12006115.5
(22) Anmeldetag: 29.08.2012
(51) Int. Cl.: F16L 23/08

(54) **Profilschelle**
Profile clamp
Collier à profil

(30) Priorität: 05.11.2011 DE 102011117753
(43) Veröffentlichungstag der Anmeldung: 08.05.2013
(73) Patentinhaber: NORMA Germany GmbH, 63477 Maintal (DE)
(72) Erfinder: Wachter, Gerhard, 63654 Büdingen (DE); Kamp, Achim, 63505 Langenselbold (DE)
(74) Vertreter: Patentanwälte Olbricht Buchhold Keulertz

(56) Entgegenhaltungen:
- EP-A2- 2 166 265
- DE-A1- 19 927 281
- DE-C1- 3 520 952
- DE-C1- 19 950 619
- DE-T1- 19 882 234
- US-A- 6 056 332

## Beschreibung

Die Erfindung betrifft eine Profilschelle, die zwei Halbschalen aufweist, die jeweils an einem ersten Ende einen Spannkopf und an jeweils einem zweiten Ende eine Verbindungsgeometrie zum Verbinden der zweiten Enden aufweisen, wobei die Spannköpfe mit einem Spannelement verbunden sind, wobei mindestens eine Halbschale gegenüber dem Spannelement verkippbar ist und die Profilschelle ein Federelement aufweist.

Eine Profilschelle ist beispielsweise aus DE 198 82 234 T1 bekannt. Dabei ist das Spannelement als Spannschraube ausgebildet, die mit Spiel durch Öffnungen in den Spannköpfen geführt ist, so dass beide Halbschalen gegenüber der Spannschraube verkippt werden können. Dadurch ist es möglich, die Profilschelle vormontiert an Verbindungsflanschen anzubringen, also mit bereits vormontierter Spannschraube. Nach Anlegen der Profilschelle an die Flansche der zu verbindenden Leitungen werden dann die Halbschalen über deren Verbindungsgeometrie miteinander verbunden und anschließend das Spannelement angezogen, so dass der Durchmesser der Profilschelle verringert wird und diese somit gespannt wird.

Profilschellen werden in der Regel zum Verbinden zweier Leitungen verwendet, die an ihren Enden Verbindungsflansche aufweisen, die von der Profilschelle umfasst werden. Die Profilschelle hat dafür in der Regel ein V-förmiges Profil. Beim Spannen der Profilschelle wird dann nicht nur eine radiale Kraft auf die Flansche ausgeübt, sondern auch eine axial gerichtete Kraft, die die Flansche der Leitungen zusammendrückt.

Das Setzen der bekannten, zwei Halbschalen aufweisenden Profilschellen ist jedoch relativ schwierig. Die Position der Halbschalen zueinander und zum Spannelement ist nicht definiert, wenn die Halbschalen nicht miteinander verbunden sind. Zur genauen Ausrichtung, um die Halbschalen miteinander verbinden zu können, ist es dann notwendig, beide Halbschalen zu positionieren. Unter beengten Raumverhältnissen ist das Setzen dieser Profilschellen daher schwierig.

DE 199 27 281 A1 beschreibt eine Klemme und eine Klemmvorrichtung für Rohre mit zwei Halbschalen die an ersten Enden durch einen Bolzen miteinander verbunden sind. Der Bolzen ist an einer Halbschale mit Hilfe eines Zapfen verbunden und mit der zweiten Halbschale durch eine Mutter. Weiterhin sind die beiden Halbschalen mit Hilfe eines Zapfens an ihren zweiten Enden miteinander verbunden. Ein erstes Federelement ist zwischen dem Bolzen und der ersten Halbschale angeordnet. Ein zweites Federelement ist zwischen den beiden Halbschalen angeordnet, allerdings an den zweiten Enden der Halbschalen.

DE 199 50 619 C1 zeigt eine Rohrkupplung mit zwei Schellenhälften, die an einem Ende durch zwei Schraubenbolzen gelenkig miteinander verbunden sind. An dem anderen Ende ist ein Schnellverschluss mit einem Schraubenbolzen vorgesehen. Ferner sind Bügelfedern vorgesehen, deren eines Ende jeweils mit einem Auge versehen ist, das um die Bolzen gelegt ist. Diese Bügelfedern sind um die mittigen Stege der Schellenhälften gelegt, um eine Längenverschiebbarkeit zum Ausgleich der beim Schließen der Rohrkupplung auftretenden Längenänderung zu ermöglichen.

EP 2 166 265 A2 zeigt eine Rohrschelle mit zwei Halbschalen, die an ihren beiden Enden durch Schrauben miteinander verbunden sind. Die Schraube ist in ein Gewindeelement eingeschraubt, das mit Hilfe eines Federelements an einem Spannkopf der einen Halbschale festgelegt ist. Der Spannkopf der anderen Halbschale weist einen Schlitz auf, in den die Schraube eintreten kann. Das Federelement ermöglicht beim Zusammendrücken der beiden Spannköpfe, dass sich die Schraube verschwenkt.

DE 35 20 952 C1 zeigt eine Schlauchkupplung mit zwei Teilschalen, die an einem ersten Ende einen Schnellverschluss mit einem Spannhebel aufweisen und am zweiten Ende durch einen Gelenkbolzen miteinander verbunden sind. Im Bereich des Schnellverschlusses ist eine Öffnungsfeder vorgesehen. Im Bereich des Gelenkbolzens ist eine Feder vorgesehen, die die beiden Teilschalen nach lösen des Schnellverschlusses auseinander drückt.
Der Erfindung liegt nun die Aufgabe zugrunde, eine Profilschelle anzugeben, die einfach, insbesondere mit einer Hand, gesetzt werden kann.
Erfindungsgemäß wird diese Aufgabe bei einer Profilschelle der eingangs genannten Art dadurch gelöst, dass das Federelement unter Vorspannung die die Halbschalen an ihren zweiten Enden auseinander drückt, an einer Innenseite der Halbschalen anliegt, wobei das Federelement am Spannelement gehalten ist.

Weil dieses Federelements dafür sorgt , dass die Halbschalen an ihrem zweiten Ende auseinander gedrückt werden , werden die beiden Halbschalen dann in ihrem möglichst großen Öffnungswinkel zueinander verkippt. Der Öffnungswinkel wird durch die Lagerung des Spannelements in den Spannköpfen vorgegeben. Dabei stabilisiert das Federelement nicht nur den Öffnungswinkel, sondern auch die Lage der Halbschalen in einer Axialrichtung. Die Verbindungsgeometrien der zweiten Enden werden auf gleicher axialer Position gehalten, so dass durch einfaches Zusammendrücken der beiden Halbschalen die Verbindungsgeometrien der zweiten Enden zusammengebracht werden können. Gleichzeitig stellt das Federelement eine ausreichende Elastizität dar, so dass nicht nur eine Verkippung, sondern auch eine Verdrehung der Halbschalen zueinander möglich ist, so dass ein relativ einfaches Setzen der Profilschelle erfolgen kann. Das Federelement sorgt also für eine definierte Position der Halbschalen in geöffnetem Zustand der Profilschelle und ermöglicht so eine Einhandbedienung.

Und weil das Federelement am Spannelement gehalten ist, wird ein ein Verrutschen des Federelements in Umfangsrichtung verhindert. Gleichzeitig kann relativ einfach die Anlage des Federelements an Innenseiten der Halbschalen gewährleistet werden.

Bevorzugterweise weist das Federelement mindestens eine radial nach außen gerichtete Ausformung mit mindestens zwei Öffnungen auf, durch die sich das Spannelement erstreckt. Die Ausformung ist beispielsweise V- oder M-förmig. Aber auch andere Ausgestaltungen sind denkbar, solange ein sicherer Halt am Spannelement sichergestellt ist. Das Federelement ist formschlüssig am Spannelement befestigt. Die Ausformung wird dabei zwischen den Spannköpfen platziert. Dabei können die Öffnungen so groß sein, dass eine Relativbewegung zwischen Spannelement und der Ausformung möglich ist. Da beim Spannen des Spannelements die Spannköpfe aufeinander zu bewegt werden, erfolgt auch eine Verformung der Ausformung, die dann aufgrund des Spiels zwischen den Öffnungen und dem Spannelement problemlos möglich ist. Im geöffneten Zustand kann eine Seite der Ausformung auch von vorneherein an einem der Spannköpfe anliegen.

Bevorzugterweise ist die Ausformung mittig zwischen zwei Schenkeln des Federbandes ausgebildet. Das Federelement erstreckt sich dann gleich weit in beide Halbschalen hinein, so dass eine gleichmäßige Kraftverteilung erfolgt. Auch wird die Erstmontage vereinfacht, da es dann unerheblich ist, in welcher Ausrichtung das Federelement montiert wird.

Bevorzugterweise ist das Federelement länger als das Spannelement. Sobald das Spannelement montiert ist, also die beiden Spannköpfe miteinander verbunden sind, liegt dann das Federelement auch an Innenseiten der Halbschalen an. Da das Federelement länger als das Spannelement ist, ist es nicht möglich, dass ein Ende des Federelements in den von dem Spannelement überbrückten Spalt zwischen den Spannköpfen rutscht. Die Bedienungssicherheit ist daher hoch.

Vorzugsweise ist das Spannelement als Spannschraube ausgebildet. Dies stellt eine relativ häufig verwendete Ausgestaltung des Spannelements dar, die mit herkömmlichen Werkzeugen bedienbar ist. Dabei sind relativ große Spannkräfte erzeugbar.

Dabei ist besonders bevorzugt, dass in einem der Spannköpfe ein Gewinde ausgebildet ist oder eine Gewindemutter gehalten ist. Bei Verwendung einer Gewindemütter ist das Ausbilden eines Gewindes im Spannkopf natürlich nicht erforderlich. Die Gewindemutter ist dabei insbesondere formschlüssig in dem Spannkopf gehalten. Die Spannschraube kann dann mit einem Werkzeug eingedreht werden und damit ein Spannen der Profilschelle bewirkt werden, ohne dass zum Halten eines Gegengewindes bzw. einer Gewindemutter ein zusätzliches Werkzeug erforderlich ist. Eine Einhandbedienung ist damit möglich.

Bevorzugterweise ist in einem der Spannköpfe ein Langloch ausgebildet. Dadurch ist eine relativ große Verkippung der Halbschalen zueinander möglich, so dass ein großer Öffnungswinkel auch dann realisierbar ist, wenn das Spannelement im Spannkopf der anderen Halbschale relativ fest gehalten ist, also nur ein Verkippen einer einzigen Halbschale erfolgt. Dabei ist die Herstellung des Langlochs mit wenig Aufwand verbunden.

Vorzugsweise ist die Verbindungsgeometrie in einer der Halbschalen als Haken und in der anderen Halbschale als Ausnehmung ausgebildet. Eine derartige Ausbildung ist relativ einfach möglich. Dabei kann der Haken relativ einfach in die Ausnehmung eingebracht werden, so dass ein Verhaken und damit eine sichere Verbindung der Halbschalen erfolgt. Über einen Haken lassen sich relativ große Kräfte übertragen. Das Einhaken kann dabei durch einfaches radiales Zusammendrücken erfolgen, zumal eine axiale Ausrichtung des Hakens zur Ausnehmung durch das Federelement vorgegeben ist.

Dabei ist besonders bevorzugt, dass der Haken durch eine insbesondere radial nach außen gebogene Lasche gebildet ist, die insbesondere einstückig mit der Halbschale ausgebildet ist. Der Haken stellt also kein zusätzliches Element dar, sondern ist einstückig mit einer der Halbschalen ausgebildet. Dadurch ist die Herstellung des Haken sehr kostengünstig. Gleichzeitig ist durch die einstückige Ausbildung eine relativ hohe Kraftübertragung gewährleistet.

Die Erfindung wird im Folgenden anhand eines bevorzugten Ausführungsbeispiels in Verbindung mit den Zeichnungen näher beschrieben. Hierin zeigen:
- Fig. 1: eine Profilschelle in geöffnetem Zustand in schematischer Ansicht,
- Fig. 2: eine Schnittansicht der Profilschelle nach Fig. 1,
- Fig. 3: die Profilschelle im geschlossenen, ungespannten Zustand,
- Fig. 4: die Profilschelle im geschlossenen und gespannten Zustand und
- Fig. 5: ein Federelement eines ersten Ausführungsbeispiels in Seitenansicht und
- Fig. 6: ein Federelement eines zweiten Ausführungsbeispiels.

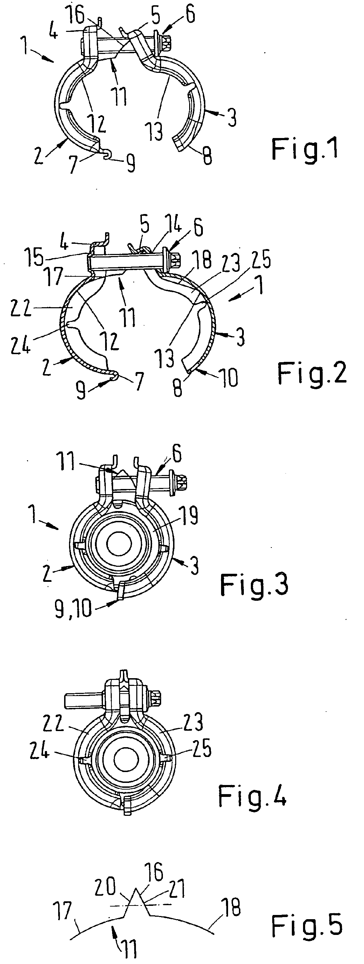

In Fig. 1 ist eine Profilschelle 1 dargestellt, die zwei Halbschalen 2, 3 aufweist. Die Profilschelle 1 ist also sozusagen zweiteilig ausgebildet. Die Halbschalen 2, 3 weisen an einem ersten Ende jeweils einen Spannkopf 4, 5 auf, in denen ein Spannelement 6 gehalten ist. An einem zweiten Ende 7, 8 weisen die Halbschalen 2, 3 jeweils eine Verbindungsgeometrie 9, 10 auf.

Am Spannelement 6 ist ein Federelement 11 derartig befestigt, dass es an Innenseiten 12, 13 der Halbschalen 2, 3 der Profilschelle 1 anliegt. Dabei ist das Federelement 11 derartig vorgespannt, dass die Halbschale 3 gegenüber der Halbschale 2 verkippt wird, wodurch die zweiten Enden 7, 8 voneinander weg gedrückt werden. Die Profilschelle 1 wird durch das Federelement 11 also in einer geöffneten Stellung gehalten, wobei die Lage der einzelnen Elemente, also der Halbschalen 2, 3 und des Spannelements 6 zueinander eindeutig definiert sind.

Das Federelement 11 ist in Form einer Blattfeder ausgebildet. Als Spannelement 6 findet eine Spannschraube Verwendung. Das Spannelement 6 ist dabei durch ein Langloch 14, das im Spannkopf 5 ausgebildet ist, durchgeführt und in ein Gewinde 15 eingeschraubt, das im Spannkopf 4 ausgebildet ist (Fig. 2). Beim Einschrauben der Spannschraube bzw. Spannen des Spannelements 6 werden also die Spannköpfe 4, 5 aufeinander zu bewegt, so dass nach vorangegangenem Schließen der Profilschelle 1, also nach Verbinden der zweiten Enden 7,8, ein Spannen der Profilschelle 1 erfolgt.

Das Federelement 11 weist bei diesem Beispiel eine V-förmige Ausformung 16 auf, die mittig zwischen zwei Schenkeln 17, 18 des Federelements 11 angeordnet ist, wobei auf beiden Seiten des V's bzw. der Ausformung eine Öffnung ausgebildet ist, durch die das Spannelement 6 geführt ist. Das Federelement 11 ist also sicher am Spannelement 6 befestigt. Die Ausformung 16 ist dabei zwischen den Spannköpfen 4, 5 angeordnet.

In Fig. 3 ist die Profilschelle 1 in geschlossenem Zustand gezeigt. Die Profilschelle 1 ist dabei um einen Flansch 19 derartig gelegt, dass sich der Flansch 19 in das Profil der Profilschelle 1 hinein erstreckt. Durch einfaches Zusammendrücken der Halbschalen 2, 3 sind die Verbindungsgeometrien 9, 10 miteinander in Eingriff gebracht worden, die als Haken ausgebildete Verbindungsgeometrie 9 ist also in die als Ausformung ausgebildete Verbindungsgeometrie 10 eingeführt worden. Die Halbschalen 2, 3 sind also miteinander verhakt. Dabei wurde das Federelement 11 elastisch verformt. Da sich das Federelement 11 an den Innenseiten 12, 13 der Halbschalen 2, 3 befindet, ist das Federelement 11 nahezu unsichtbar. Nur im Bereich des Spannelements 6 zwischen den Spannköpfen 4, 5 ist das Federelement 11 sichtbar, wobei dort insbesondere die V-förmige Ausformung 16 zu sehen ist, die sich zwischen den Spannköpfen 4, 5 befindet.

In diesem Zustand ist ein Auseinanderfallen der einzelnen Elemente nicht mehr möglich, wohl aber eine Korrektur des Sitzes der Profilschelle 1 am Flansch 19. Erst durch Anziehen des Spannelements 6 bzw. Einschrauben der Spannschraube wird die Profilschelle 1 gespannt und übt dann entsprechende Haltekräfte aus. Dies ist in Fig. 4 dargestellt.

In Fig. 5 ist das Federelement 11 schematisch in Seitenansicht dargestellt. Die V-förmige Ausformung 16 ist mittig zwischen den Schenkeln 17, 18 angeordnet. Das Federelement 11 ist beispielsweise durch einen Blechstreifen gebildet und kann eine Vorkrümmung aufweisen, die etwas geringer als die Krümmung der Halbschalen 2, 3 ist, so dass eine Vorspannung gewährleistet ist. In der V-förmigen Ausformung 16 sind Öffnungen 20, 21 vorgesehen, durch die das Spannelement 6 geführt werden kann. Dabei ist die Größe der Öffnungen 20, 21 so bemessen, dass das Spannelement etwas Spiel hat. Eine Relativbewegung zwischen dem Spannelement 6 und dem Federelement 11 bzw. der Ausformung 16 ist daher möglich.

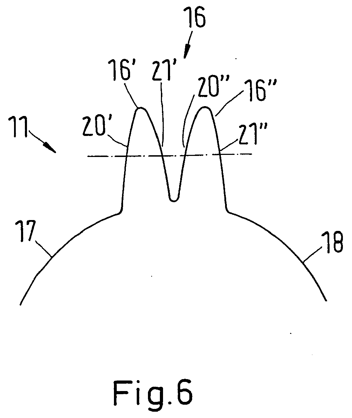

In Fig. 6 ist ein zweites Ausführungsbeispiel des Federelements 11 dargestellt, bei dem die Ausformung 16 M-förmig ausgebildet ist. Die Ausformung 16 ist dabei sozusagen durch zwei Erhebungen 16', 16" gebildet. Um das Spannelement 6 durch die Ausformung 16 durchführen zu können, ist in jedem Schenkel der M-förmigen Ausformung 16 eine Öffnung erforderlich, also insgesamt vier Öffnungen. Die Erhebung 16' weist dementsprechend die Öffnungen 20' und 21' auf und die Erhebung 16" die Öffnungen 20" und 21". Bei einer derartigen Ausbildung liegen die äußeren Flanken der Ausformung 16 an Innenseiten der Spannköpfe 4, 5 an. Im geöffneten Zustand der Schelle ergibt sich damit eine symmetrischere Ausrichtung des Federelements 11.

Andere Ausgestaltungen der Ausformung 16 sind ebenfalls möglich. Wichtig ist dabei nur, dass die Ausformung Öffnungen aufweist, durch die das Spannelement geführt werden kann, um die Ausformung 16 zwischen den Spannköpfen 4, 5 und damit das Federelement 11 innerhalb der Schelle 1 zu halten.

Bei der gezeigten Profilschelle 1 sind in Profilwänden 22, 23 der Halbschalen 2, 3 jeweils eine Unterbrechung 24, 25 ausgebildet. Durch diese Unterbrechung 24, 25 weist die Profilschelle 1 eine etwas höhere Elastizität auf, so dass sie in einem größeren Toleranzbereich eingesetzt werden kann.

Die Unterbrechungen 24, 25 können aber auch dazu genutzt werden, einen entsprechenden Vorsprung des Flansches 19 aufzunehmen und damit eine definierte Winkelposition der Profilschelle 1 gegenüber dem Flansch 19 sicherzustellen.

In einem Anlieferzustand, also einem vormontierten Zustand, wird die Profilschelle 1 durch das Federelement 11, das auf Innenseiten der Halbschalen drückt, offen gehalten. Da das Federelement innerhalb der Profilschelle bzw. im Profil der Profilschelle liegt, ist kein zusätzlicher Platzbedarf erforderlich. Das Spannelement ist durch Öffnungen in dem Federelement geführt und positioniert dadurch das Federelement innerhalb der Profilschelle. Durch eine Vorspannung des Federelements wird dabei sichergestellt, dass die geöffnete Profilschelle den maximalen Öffnungswinkel aufweist. Die Profilschelle kann dann relativ einfach auf einen Flansch aufgesetzt werden.

Anschließend werden die Halbschalen derartig zusammengedrückt, dass die zweiten Enden mit ihren Verbindungsgeometrien miteinander verrasten oder verhaken. Die Profilschelle ist damit geschlossen und bereits unverlierbar am Flansch gehalten. Dabei erfolgt das Schließen der Halbschalen gegen die Kraft des Federelements, das dabei elastisch verformt wird. Durch anschließendes Spannen des Spannelements erfolgt schließlich das Spannen der Profilschelle.

Durch das Federelement wird eine spielfreie Befestigung des Spannelements innerhalb der Spannköpfe der Profilschelle erreicht. Daher ist auch im geöffneten Zustand eine definierte Positionierung der Halbschalen und des Spannelements zueinander gegeben. Dadurch ist eine sehr einfache Endmontage möglich, beispielsweise einhändig, wobei Montagekräfte kleiner als 40 N realisierbar sind.

## Patentansprüche

1. Profilschelle, die zwei Halbschalen (2,3) aufweist, die jeweils an einem ersten Ende einen Spannkopf (4, 5) und an jeweils einem zweiten Ende (7, 8) eine Verbindungsgeometrie (9, 10) zum Verbinden der zweiten Enden (7, 8) aufweisen, wobei die Spannköpfe (4, 5) mit einem Spannelement (6) verbunden sind, wobei mindestens eine Halbschale (3) gegenüber dem Spannelement verkippbar ist und die Profilschelle ein Federelement (11) aufweist, wobei das Federelement (11) unter Vorspannung, die die Halbschalen (2, 3) an ihren zweiten Enden auseinander drückt, an einer Innenseite (12, 13) der Halbschalen (2, 3) anliegt, und wobei das Federelement (11) am Spannelement (6) gehalten ist.

2. Profilschelle nach Anspruch 1 , **dadurch gekennzeichnet, dass** das Federelement (11) mindestens eine radial nach außen gerichtete Ausformung (16) mit mindestens zwei Öffnungen (20, 21) aufweist, durch die sich das Spannelement (6) erstreckt.

3. Profilschelle nach Anspruch 2, **dadurch gekennzeichnet, dass** die Ausformung (16) mittig zwischen zwei Schenkeln (17, 18) des Federelements (11) ausgebildet ist.

4. Profilschelle nach einem der Ansprüche 1 bis 3, **dadurch gekennzeichnet, dass** das Federelement (11) länger als das Spannelement (6) ist.

5. Profilschelle nach einem der Ansprüche 1 bis 4, **dadurch gekennzeichnet, dass** das Spannelement (6) als Spannschraube ausgebildet ist.

6. Profilschelle nach Anspruch 5, **dadurch gekennzeichnet, dass** in einem der Spannköpfe (4, 5) ein Gewinde (15) ausgebildet ist oder eine Gewindemutter gehalten ist.

7. Profilschelle nach einem der Ansprüche 1 bis 6, **dadurch gekennzeichnet, dass** in einem der Spannköpfe (4, 5) ein Langloch (14) ausgebildet ist.

8. Profilschelle nach einem der Ansprüche 1 bis 7, **dadurch gekennzeichnet, dass** die Verbindungsgeometrie (9, 10) in einer der Halbschalen (2) als Haken (9) und in der anderen Halbschale (3) als Ausnehmung (10) ausgebildet ist.

9. Profilschelle nach Anspruch 8, **dadurch gekennzeichnet, dass** der Haken (9) durch eine insbesondere radial nach außen gebogene Lasche gebildet ist, die insbesondere einstückig mit der Halbschale (2) ausgebildet ist.

## Claims

1. Profile clamp comprising two half shells (2, 3) which at a first end each have a clamping head (4, 5) and at a second end (7, 8) each have a connecting geometry (9, 10) for connecting the second ends (7, 8), wherein the clamping heads (4, 5) are connected with a clamping element (6), wherein at least one half-shell (3) can be pivoted vis-a-vis the clamping element and the profile clamp has a spring element (11), wherein the spring element (11) is in contact with an inner side (12, 13) of the half-shells (2, 3) with a pretensioning that presses the second ends of the half-shells (2, 3) apart, and wherein the spring element (11) is held on the clamping element (6).

2. Profile clamp according to claim 1 **characterised in that** the spring element (11) has a least one shaped section (16) facing radially outwards with at least two openings (20, 21), through which the clamping element (6) extends.

3. Profile clamp according to claim 2 **characterised in that** the shaped section (16) is formed centrally between two limbs (17, 18) of the spring element (11).

4. Profile clamp according to any one of claims 1 to 3 **characterised in that** the spring element (11) is longer than the clamping element (6).

5. Profile clamp according to any one of claims 1 to 4 **characterised in that** the clamping element (6) is in the form of a clamping screw.

6. Profile clamp according to claim 5 **characterised in that** a thread (15) is provided in one of the clamping heads (4, 5) or a threaded nut is held therein.

7. Profile clamp according to any one of claims 1 to 6 **characterised in that** an elongated hole (14) is provided in one of the clamping heads (4, 5)

8. Profile clamp according to any one of claims 1 to 7 **characterised in that** the connecting geometry (9, 10) in one of the half-shells (2) is in the form of a hook (9) and in the other half-shell (3) is in the form of a recess (10).

9. Profile clamp according to claim 8 **characterised in that** the hook (9) is formed by an outwardly bent tab, which, more particularly, is formed in one piece with the half-shell (2).

## Revendications

1. Collier de serrage profilé, qui comporte deux demi-coques (2, 3) qui comportent à chaque fois à une première extrémité une tête de serrage (4, 5) et à une deuxième extrémité (7, 8) une géométrie de liaison (9, 10) pour relier les deux extrémités (7, 8), les têtes de serrage (4, 5) étant reliées à un élément de serrage (6), au moins une demi-coque (3) pouvant être basculée par rapport à l'élément de serrage et le collier de serrage profilé comportant un élément ressort (11), l'élément ressort (11) s'appuyant contre un côté intérieur (12, 13) des demi-coques (2, 3) sous l'action d'une précontrainte qui pousse les demi-coques (2, 3) à l'écart l'une de l'autre au niveau de leurs deuxièmes extrémités et l'élément ressort (11) étant maintenu sur l'élément de serrage (6).

2. Collier de serrage profilé selon la revendication 1, **caractérisé en ce que** l'élément ressort (11) comporte au moins une partie déformée (16) dirigée de façon radiale vers l'extérieur et munie d'au moins deux ouvertures (20, 21) à travers lesquelles s'étend l'élément de serrage (6).

3. Collier profil selon la revendication 2, **caractérisé en ce que** la déformation (16) est conçue au centre entre deux branches (17, 18) de l'élément ressort (11).

4. Collier de serrage profilé selon l'une des revendications 1 à 3, **caractérisé en ce que** l'élément ressort (11) est plus long que l'élément de serrage (6).

5. Collier de serrage profilé selon l'une des revendications 1 à 4, **caractérisé en ce que** l'élément de serrage (6) est conçu comme une vis de serrage.

6. Collier de serrage profilé selon la revendication 5, **caractérisé en ce qu'**un filetage (15) est conçu dans l'une des têtes de serrage (4, 5) ou un écrou fileté y est maintenu.

7. Collier de serrage profilé selon l'une des revendications 1 à 6, **caractérisé en ce qu'**un trou oblong (14) est conçu dans l'une des têtes de serrage (4, 5).

8. Collier de serrage profilé selon l'une des revendications 1 à 7, **caractérisé en ce que** la géométrie de liaison (9, 10) est conçue comme un crochet (9) dans l'une des demi-coques (2) et comme un évidement (10) dans l'autre demi-coque (3).

9. Collier de serrage profilé selon la revendication 8, **caractérisé en ce que** le crochet (9) est formé par une languette qui est notamment pliée de façon radiale vers l'extérieur et qui est conçue notamment d'un seul tenant avec la demi-coque (2).
